# DEMANDE DE BREVET EUROPEEN

(11) **EP 4 755 726 A1**
(43) Date de publication de la demande: **10.06.2026**
(21) Numéro de dépôt: 25212422.7
(22) Date de dépôt: 30.10.2025
(51) Int. Cl.: B60R 19/18

(54) **VÉHICULE ÉQUIPÉ D'UNE ARMATURE DE PARE-CHOCS AVANT RENFORCÉE**

(30) Priorité: 04.12.2024 FR 2413450
(71) Demandeur: Stellantis Auto SAS, 78300 Poissy (FR)
(72) Inventeur: BOUDAN, JULIEN, 91210 DRAVEIL (FR); PERON, RODOLPHE, 95220 HERBLAY (FR); AYOUB, EL KHALLOUI, 16000 SIDI KACEM (MA)
(74) Mandataire: BCIP

(57) **Abrégé**

L'invention concerne un véhicule équipé d'un pare-chocs avant, d'une armature (6) de pare-chocs fixée sur le châssis du véhicule et sur laquelle est montée le pare-chocs avant par l'intermédiaire d'au moins une patte de maintien, d'une pièce (3), dite Vizor, fixée sur la face externe (4) d'une partie (5) du pare-chocs et remplaçant une grille d'aération, caractérisé en ce qu'une partie (9) de l'armature (6) de pare-chocs est pourvue d'au moins deux pattes de fixation (11) de la partie inférieure du pare-chocs avant sur l'armature (6).

## Description

L'invention a trait à un véhicule équipé d'une armature de pare-chocs avant renforcée.

Ici, le terme véhicule désigne une voiture, une fourgonnette, un camion, un véhicule de transport de personnes, un véhicule de loisir tel qu'un camping-car ou un van aménagé, le véhicule étant motorisé préférentiellement par un moteur électrique ou par une motorisation hybride.

Sur certains véhicules, notamment sur les véhicules de la marque OPEL, la grille d'entrée d'air est remplacée par une pièce en polycarbonate connue sous la dénomination de Vizor. Ce terme sera préférentiellement utilisé par la suite pour faciliter la lecture. Cette pièce est placée à l'avant, sur la face externe du pare-chocs. Du fait du matériau constitutif du Vizor, de sa configuration et de son emplacement, il convient d'assurer la rigidité de la partie externe du pare-chocs, ou peau de pare-chocs, située au niveau du Vizor. En d'autres termes, il convient que la présence du Vizor n'affecte pas la rigidité du pare-chocs ni sa conformité à la réglementation en vigueur. On connaît par EP-B-3 978 319 une armature de pare-chocs comportant des pattes de maintien. Une telle armature ne permet pas la fixation d'une pièce telle qu'un Vizor.

L'invention a pour objet de proposer une solution permettant la fixation du Vizor tout en renforçant la peau du pare-chocs située sous le Vizor, cela sans pièce supplémentaire.

À cet effet, l'invention a pour objet un véhicule équipé d'un pare-chocs avant, d'une armature de pare-chocs fixée sur le châssis du véhicule et sur laquelle est montée le pare-chocs avant par l'intermédiaire d'au moins une patte de maintien, d'une pièce, dite Vizor, fixée sur la face externe d'une partie du pare-chocs, dite peau de pare-chocs, la pièce remplaçant une grille d'aération, caractérisé en ce qu'une partie de l'armature de pare-chocs est pourvue d'au moins deux pattes de fixation de la partie inférieure du pare-chocs avant sur l'armature.

Grâce à l'invention, on obtient un véhicule équipé d'un pare-chocs avant dont la rigidité est renforcée par la présence des pattes de fixation en partie basse de l'armature, par exemple au niveau des angles droit et gauche du pare-chocs, cela sans affecter le montage, en partie haute et centrée, de la pièce dite Vizor.

Selon des aspects avantageux, mais non obligatoires de l'invention, un tel véhicule peut comprendre une ou plusieurs des caractéristiques suivantes :
Les deux pattes de fixation sont situées aux coins inférieurs d'un bord libre d'une partie de l'armature et s'étendent vers l'extérieur, sensiblement orthogonalement par rapport à la partie de l'armature.

Les pattes de fixation sont identiques.

Les pattes de fixation ne sont pas identiques.

Le nombre et/ou la position des pattes de fixation sont différents.

Au moins un organe de renfort équipe le bord libre de la partie de l'armature.

Plusieurs organes de renfort sont régulièrement répartis sur le bord.

Les organes de renfort sont configurés en coins pleins.

Les pattes de fixation sont placées en porte à faux par rapport aux pattes de maintien.

Le porte à faux est d'environ 80 mm.

L'invention sera mieux comprise et d'autres avantages de celle-ci apparaîtront plus clairement à la lecture de la description qui va suivre, donnée uniquement à titre d'exemple non limitatif et faite en référence aux dessins annexés dans lesquels:
[Fig.1] est une vue de face, simplifiée, du pare-chocs avant d'un véhicule selon un mode de réalisation de l'invention,
[Fig.2] est une vue en perspective, à une autre échelle, des éléments constitutifs du pare-chocs illustré à la figure 1, en position de prémontage,
[Fig.3] est une vue en perspective à une autre échelle de l'armature de pare-chocs seule, selon un mode de réalisation de l'invention,
[Fig.4] est une vue de face et à une autre échelle de l'armature illustrée à la figure 3,
[Fig.5] est une vue en perspective par l'avant, partielle et à plus grande échelle d'une extrémité de l'armature illustrée aux figures 3 et 4 et
[Fig.6] est une vue en coupe, selon la flèche VI à la figure 1 et à plus grande échelle.

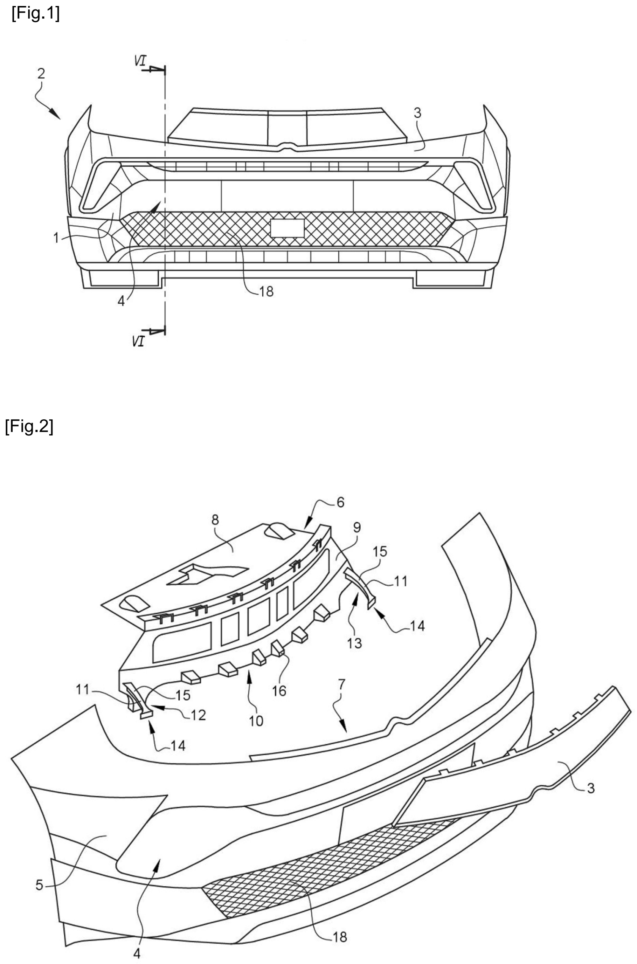

La figure 1 illustre un pare-chocs avant 1 d'un véhicule 2, ici une voiture, de la marque OPEL. Un tel pare-chocs, pour cette marque de véhicules, est équipé d'une pièce 3 qui remplace la grille d'aération. Cette pièce 3 est généralement en polycarbonate. On conçoit qu'une telle pièce peut équiper d'autres types de véhicules de la marque OPEL ou, en variante, des véhicules d'une autre marque. Par la suite et comme indiqué précédemment, pour faciliter la lecture, le terme Vizor qui désigne la pièce 3 sera utilisé. Le Vizor 3 est situé sur la partie haute du pare-chocs 1, sur la face externe 4 de ce dernier et au voisinage du capot moteur. Il occupe sensiblement toute la partie centrale du pare-chocs 1. Le Vizor 3 est monté sur la face 4 soit une fois le pare-chocs 1 en place sur le véhicule 2 soit avant le montage du pare-chocs 1 sur le véhicule 2.

La figure 2 illustre les principaux éléments constitutifs du pare-chocs 1 en position de prémontage. Outre le Vizor 3, le pare-chocs 1 comprend une partie 5 nommée peau de pare-chocs et qui forme la partie visible du pare-chocs 1 à partir de la face avant du véhicule 2. Une pièce nommée armature de pare-chocs 6 est située en arrière de la peau de pare-chocs 5, donc non visible de l'extérieur du véhicule 1. L'armature 6 assure le maintien de la peau de pare-chocs 5 et sa liaison au châssis du véhicule 2. L'armature 6 est reliée à la face interne 7, opposée à la face 4, du pare-chocs 1. L'armature 6 comprend une première partie 8 qui est fixée au châssis du véhicule 2. Cette partie 8 est globalement plane et horizontale lorsqu'elle est en place dans le véhicule 2. Une deuxième partie 9 est reliée à un bord de la partie 8 et elle s'étend sensiblement perpendiculairement vers le bas, en regardant la figure 2. C'est sur la partie 9 que la peau de pare-chocs 5 est fixée.

Le bord libre inférieur 10 de la partie 9 est pourvu d'au moins deux pattes de fixation 11. Dans l'exemple, les pattes 11 sont identiques et au nombre de deux. Elles sont situées aux coins inférieurs 12, 13 du bord libre 10. Dans d'autres modes de réalisation, le nombre et/ou la position des pattes 11 sont différents. De même, les pattes 11 peuvent ne pas être toutes identiques.

Les pattes 11 s'étendent vers l'extérieur, sensiblement orthogonalement par rapport à la partie 9 de l'armature 6. En d'autres termes, les pattes 11 sont orientées en direction de la face 7 de la peau de pare-chocs 5. Dans le mode de réalisation illustré, les pattes 11 sont configurées en éléments allongés, globalement à section transversale en H. L'extrémité libre 14 de chaque patte 11 est aplatie et orientée perpendiculairement au corps principal 15 de chaque patte 11. On conçoit que la configuration et/ou les dimensions du corps principal 15 et/ou de l'extrémité libre 14 de chaque patte 11 peuvent être différentes de celles décrites. Dans tous les cas, la configuration et/ou les dimensions de chaque patte 11 sont adaptées à la configuration et/ou aux dimensions de la peau de pare-chocs 5 et/ou de l'armature 6 sur laquelle est fixée la peau de pare-chocs 5.

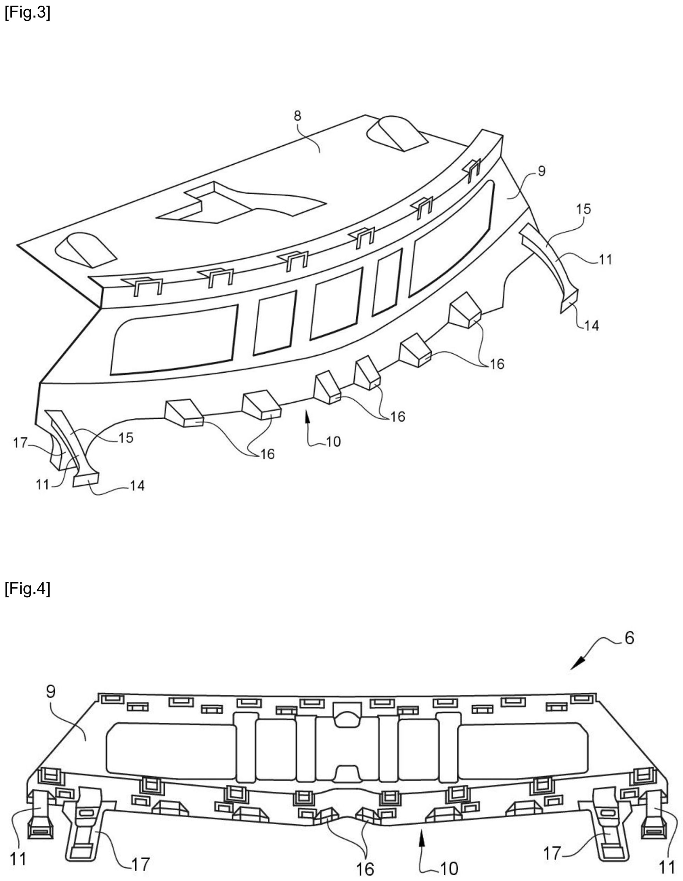

Comme cela ressort en particulier de la figure 3, la partie 9 de l'armature 6 est, de manière avantageuse, mais non obligatoire, également équipée au niveau du bord 10, d'au moins un organe de renfort 16. Ici, plusieurs organes 16, identiques, sont régulièrement répartis entre les pattes 11 sur toute la longueur du bord 10. Ici, les organes 16 sont en forme de coin plein. En variante, ils ont une autre forme. De même, la répartition et/ou les dimensions des organes 16 peuvent être différentes. En variante, ils ne sont pas tous identiques. Dans tous les cas, les organes 16 définissent une zone de renfort de la partie basse du Vizor 3, entre les projecteurs droit et gauche placés sur la face 4 du pare-chocs 1. Une telle zone de renfort assure le renforcement de la partie basse du pare-chocs 1. La fixation entre les pattes 11, les organes 16 et la face 7 du pare-chocs 1 est obtenue par des techniques connues en soi par exemple par collage, vissage, clipsage ou autres.

Comme cela apparaît à la figure 4, chaque patte 11 présente, par rapport à chaque patte de maintien 17 connue de l'état de la technique, un porte à faux d'environ 80 mm. Un tel porte à faux permet de réaliser un rappel de fixation avec la partie inférieure du pare-chocs 1, et donc rigidifie l'ensemble. En d'autres termes, les pattes de fixation 11 viennent en complément des pattes de maintien 17 afin de renforcer la peau de pare-chocs 5 et du Vizor 3.

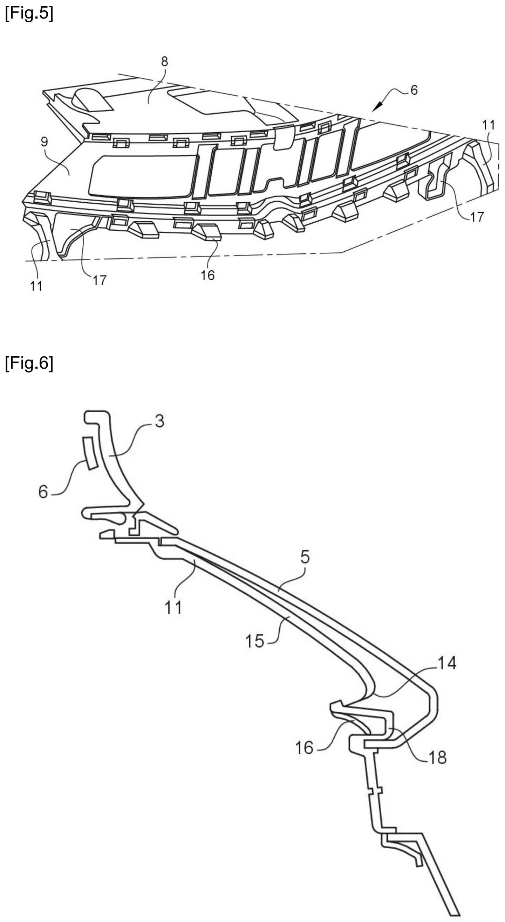

La figure 6 permet de visualiser la liaison entre l'armature 6 et la peau de pare-chocs 5. On note que le corps principal 15 de chaque patte de fixation 11 est, si ce n'est en appui contre la face 7 au moins au plus proche de cette dernière. De même les organes de renfort 16 viennent assurer la rigidité de la partie basse de la grille inférieure 18. On note que les dimensions et la forme des divers éléments sont complémentaires, afin d'avoir, au niveau des zones concernées, au moins une double épaisseur de matériau, ce qui participe au renfort de la peau de pare-chocs 5 et à la rigidité de l'ensemble de l'avant du véhicule 2.

Grâce à l'invention, on assure une optimisation de la rigidité du pare-chocs 1 et du Vizor 3 sans ajout de pièce supplémentaire et donc en limitant le surplus de poids et les coûts de production. L'invention assure le respect des contraintes techniques en matière de rigidité et de robustesse tout en répondant aux contraintes de style des véhicules pourvus d'un pare-chocs avant équipé d'un Vizor.]

## Revendications

1. Véhicule (2) équipé d'un pare-chocs avant (1), d'une armature (6) de pare-chocs fixée sur le châssis du véhicule (2) et sur laquelle est montée le pare-chocs avant (1) par l'intermédiaire d'au moins une patte de maintien (17), d'une pièce (3), dite Vizor, fixée sur la face externe (4) d'une partie (5) du pare-chocs (1), dite peau de pare-chocs, la pièce (3) remplaçant une grille d'aération, **caractérisé en ce qu'**une partie (9) de l'armature (6) de pare-chocs est pourvue d'au moins deux pattes de fixation (11) de la partie inférieure du pare-chocs avant (1) sur l'armature (6).

2. Véhicule selon la revendication 1, **caractérisé en ce que** les deux pattes de fixation (11) sont situées aux coins inférieurs (12, 13) d'un bord libre (10) d'une partie (9) de l'armature (6) et s'étendent vers l'extérieur, sensiblement orthogonalement par rapport à la partie (9) de l'armature (6).

3. Véhicule selon la revendication 1, **caractérisé en ce que** les pattes de fixation (11) sont identiques.

4. Véhicule selon la revendication 1, **caractérisé en ce que** les pattes de fixation (11) ne sont pas identiques.

5. Véhicule selon la revendication 2, **caractérisé en ce que** le nombre et/ou la position des pattes de fixation (11) sont différents.

6. Véhicule selon la revendication 2, **caractérisé en ce qu'**au moins un organe de renfort (16) équipe le bord libre (10) de la partie (9) de l'armature (6).

7. Véhicule selon la revendication 6, **caractérisé en ce que** plusieurs organes de renfort (16) sont régulièrement répartis sur le bord (10).

8. Véhicule selon la revendication 7, **caractérisé en ce que** les organes de renfort (16) sont configurés en coins pleins.

9. Véhicule selon la revendication 1, **caractérisé en ce que** les pattes de fixation (11) sont placées en porte à faux par rapport aux pattes de maintien (17).

10. Véhicule selon la revendication 9, **caractérisé en ce que** le porte à faux est d'environ 80 mm.
